# EUROPÄISCHE PATENTANMELDUNG

(11) **EP 4 368 330 A1**
(43) Veröffentlichungstag der Anmeldung: **15.05.2024**
(21) Anmeldenummer: 22207209.2
(22) Anmeldetag: 14.11.2022
(51) Int. Cl.: B23K 26/03, B23K 26/38, B23K 31/00, B23K 26/08, B23K 31/12, B23K 37/04

(54) **STEUERUNG EINER LASERSCHNEIDMASCHINE MITTELS LUFTSCHALLSIGNALEN**

(71) Anmelder: Bystronic Laser AG, 3362 Niederönz (CH)
(72) Erfinder: BERGER, Michael, 3005 Bern (CH); LÜDI, Andreas, 3400 Burgdorf (CH); BADER, Roland, 4933 Rütschelen (CH)
(74) Vertreter: Schwarz, Claudia

(57) **Zusammenfassung**

Die vorliegende Erfindung betrifft ein Verfahren zum Bereitstellen eines Qualitätsschätzergebnisses und eine Laserschneidmaschine (L) zum Schneiden von Werkstücken (13) an einer Bearbeitungsstelle (100). Die Laserschneidmaschine ist ausgebildet mit
- einem Laserschneidkopf (3), der wenigstens in einer X-Richtung beweglich gelagert ist und eine Strahlausbreitungsrichtung (E) eines Laserstrahls definiert;
- einer Lagereinrichtung (14) zur Lagerung des zu schneidenden Werkstücks (13);
- einem Maschinenrahmen (5) mit wenigstens einem Rahmenteil (7, 7');
- wenigstens einem in der X-Richtung relativ zu dem Rahmenteil (7, 7') beweglichen Luftschallsensor (11), wobei der wenigstens eine Luftschallsensor (11) in Strahlausbreitungsrichtung (E) nach, insbesondere unterhalb, der Bearbeitungsstelle (100) angeordnet und zu dieser hin ausgerichtet ist.

## Beschreibung

Die Erfindung liegt auf dem Gebiet der Laserschneidtechnologie und betrifft insbesondere eine Laserschneidmaschine, ein Verfahren zum Erfassen von Luftschallsignalen einer Laserschneidmaschine, eine digitale Verarbeitungseinheit, ein Laserschneidsystem und ein Computerprogramm.

Bei der Bearbeitung von Werkstücken, insbesondere flächigen oder rohrförmigen Werkstücken, z.B. aus Metall, sind eine Vielzahl von Einstellungen an der Laserschneidmaschine zu treffen, um die gewünschte Qualität zu erzielen. Es kann auch notwendig sein, diese Einstellungen dynamisch während des Schneidprozesses zu verändern, um die geforderte Qualität des Schneidergebnisses an allen Positionen zu erfüllen. Die Einstellungen können z.B. eine Fokusposition und/oder eine Vorschubgeschwindigkeit und/oder eine Laserleistung und/oder einen Düsenabstand und/oder ein Prozessgasdruck und/oder eine Laserstrahlmagnifikation zum Werkstück betreffen.

Die Qualität (Schneidqualität) kann als Qualitätsstatus prozessiert werden und/oder kann mehrdimensional sein. Der Qualitätsstatus kann unterschiedliche Qualitätskenngrössen umfassen, wie insbesondere Riefenbildung (die Schnittflächen sollen möglichst eben, ohne Riefen sein), Gratbildung, Schnittspaltbreite, Braue, Schlackenanhaftung, Rechtwinkligkeit und/oder weitere Qualitätsmerkmale.

Im Stand der Technik ist es bekannt, optische Sensorsignale, beispielsweise von einer Kamera, die auf die Prozesszone gerichtet ist, zu erfassen und zur Beurteilung der Qualität zu verarbeiten. Die Kamera ist dabei vorzugsweise am Schneidkopf angeordnet und ist von oben auf die Prozesszone ausgerichtet. So zeigt die WO2018069308A1 das Beobachten der Schnittspaltbreite, wobei gezeigt wird, dass die Fokuslage des Arbeitslasers mittels Schnittspaltbreitenerkennung bestimmt werden kann. Die DE102009050784B4 zeigt den Einsatz von Kamera und Beleuchtung, wobei Bilder mit unterschiedlichen Lichtverhältnissen aufgenommen werden, die gemeinsam zur Beurteilung von Prozessmerkmalen ausgewertet werden.

Die Erkennung und/oder Beurteilung der Qualität alleine auf Basis von optischen Signalen ist jedoch eingeschränkt.

Weiter ist die US2020061746 AA bekannt, in welcher ein Sensor vorgestellt wird, um einerseits den Prozessgasfluss und andererseits den Schall des Prozessgasflussaufpralls von oben (oberhalb des Werkstückes) zu messen. Auch hier mag eine industrielle Umsetzung anspruchsvoll sein. Zudem scheint der Ansatz ungeeignet um Schneidqualität schätzen zu können.

Der vorliegenden Erfindung liegt deshalb die Aufgabe zu Grunde, eine verbesserte Laserschneidmaschine bereitzustellen, welche insbesondere eine verbesserte Schneidqualitätserkennung aufweist, sowie ein verbessertes Verfahren zur Erfassung von Luftschall, insbesondere zur Schneidqualitätsschätzung, sowie eine digitale Verarbeitungseinheit, ein Laserschneidsystem und ein Computerprogramm bereitzustellen.

Diese Aufgabe wird durch die beiliegenden, einander nebengeordneten Patentansprüche gelöst, insbesondere durch eine Laserschneidmaschine, ein Verfahren zum Erfassen von Luftschall, das zum Bereitstellen eines Qualitätsschätzergebnisses für einen Laserschneidprozess einer Laserschneidmaschine verwendbar ist, eine digitale Verarbeitungseinheit, ein Laserschneidsystem und ein Computerprogramm.

Nachfolgend wird die Erfindung zunächst anhand des Vorrichtungsanspruchs beschrieben. Dabei erwähnte Merkmale, Vorteile oder alternative Ausführungsformen sind ebenso auch auf die anderen beanspruchten Gegenstände zu übertragen und umgekehrt. Mit anderen Worten können die gegenständlichen Ansprüche (die beispielsweise auf eine Laserschneidmaschine, ein System oder auf ein Computerprogrammprodukt gerichtet sind) mit den Merkmalen weitergebildet sein, die in Zusammenhang mit dem Verfahren beschrieben oder beansprucht sind und umgekehrt. Die entsprechenden funktionalen Merkmale des Verfahrens werden dabei durch entsprechende gegenständliche Module, insbesondere durch Hardware-Module oder Mikroprozessor-Module, des Systems bzw. des Produktes ausgebildet und umgekehrt. Die im Zusammenhang mit dem Verfahren beschriebenen bevorzugten Ausführungsformen der Erfindung werden nicht explizit für die Vorrichtung wiederholt, können aber auf diese übertragen bzw. angewendet werden und umgekehrt.

Gemäss einem ersten Aspekt betrifft die Erfindung eine Laserschneidmaschine zum Schneiden von Werkstücken an einer Bearbeitungsstelle, mit
- einem Laserschneidkopf, der wenigstens in einer X-Richtung beweglich gelagert ist und eine Strahlausbreitungsrichtung eines Laserstrahls definiert;
- einer Lagereinrichtung zur Lagerung des zu schneidenden Werkstücks;
- einem Maschinenrahmen mit wenigstens einem Rahmenteil;
- wenigstens einem in der X-Richtung relativ zu dem Rahmenteil beweglichen Luftschallsensor, wobei der wenigstens eine Luftschallsensor in Strahlausbreitungsrichtung nach, insbesondere unterhalb, der Bearbeitungsstelle angeordnet und zu dieser hin ausgerichtet ist.

Der zumindest eine Luftschallsensor dient zur Erfassung von luftgetragenem Schall, der erfindungsgemäss ausgewertet werden soll. Denn luftgetragener Schall lässt sich (im Gegensatz zu Schweissen, Härten, Lasersintern, etc.) beim Laserschneiden bisher schlecht einsetzen, weil beim Laserschneiden grosse Prozessgasströme eingesetzt werden, die die Metallschmelze aus der Schnittfuge treiben. Dieser starke Gasstrahl verursacht, dass der Schall, der für die Qualitätsauswertung wichtige Informationen über den Schneidprozess beinhalten kann, unter das Blech (bzw. Werkstück) geblasen/getragen wird und sich dort ausbreitet. Bei einer Detektion von Schallsignalen, insbesondere Luftschallsignalen ist die Interpretation und zielführende Auswertung der erfassten Signale von großer Bedeutung. Dies konnte im Stand der Technik bisher nicht zur Zufriedenheit gelöst werden. Verstärkend kommt hinzu, dass der Raum unter dem Blech schlecht zugänglich ist.

Die erfindungsgemässe Idee ist nun, einen oder mehrere Luftschallsensoren, bevorzugt ein oder mehrere Mikrophone, insbesondere Richtmikrophone, am Rande des Bearbeitungsbereiches an einer bewegten Schneidbrücke (auch Brücke genannt) unterhalb des Werkstückes anzuordnen, so dass das mindestens eine Mikrophon/Richtmikrophon mit der Brücke während des Schneidvorgangs mitfährt. Auf diese Weise kann der Schall im Raum unterhalb der Bearbeitungsstelle bzw. in Ausbreitungsrichtung des Gasstrahls nach der Bearbeitungsstelle auf überraschend einfache Weise erfasst werden. Weiterhin kann die Schneidqualität aus einem erfassten Sonogramm abgeschätzt werden. Der zumindest eine Luftschallsensor kann vorzugsweise, in Strahlausbreitungsrichtung gesehen, unter einer Auflageebene angeordnet sein.

Als Vorteil ergibt sich u.a. eine schlanke Konstruktion mit den Luftschallsensoren, die keine oder nur wenig Umbaumassnahmen an den bisherigen Maschinen erfordert und dennoch hocheffiziente und zuverlässige Messergebnisse liefert.

Die Laserschneidmaschine dient zur Materialbearbeitung und insbesondere zum Schneiden von metallischen Werkstücken, insbesondere Metallblechen oder Metallrohren, im Hochleistungsbereich von über 1 kW, insbesondere über 12kW und noch bevorzugt über 20kW.

Die Laserschneidmaschine umfasst eine Laserstrahlquelle, eine Laserstrahlführung und einen Bearbeitungskopf (Schneidkopf, Fokussieroptik) inklusive Schneiddüse. Der die Laserstrahlquelle verlassende Strahl kann im Nahinfrarotbereich (Nd:YAG-Laser, Faserlaser, Scheibenlaser, Diodendirekt-Laser) über Lichtleitkabel, beim CO2-Laser über Umlenkspiegel zur Fokussieroptik und über diese an die Bearbeitungsstelle geführt werden. Die Fokussieroptik bündelt den Laserstrahl in einem Fokus und erzeugt so die zum Schneiden erforderliche Intensität.

Die Bearbeitungsstelle kennzeichnet eine Position auf oder in dem Werkstück. Die Bearbeitungsstelle liegt vorzugsweise in einer Ebene des Werkstückes. Die Bearbeitungsstelle kann mehr oder weniger mit der Stelle des Fokus übereinstimmen. In der Regel liegt keine exakte Übereinstimmung vor, da der Fokus leicht oberhalb, innerhalb oder auch unterhalb des Werkstückes liegen kann. Die Bearbeitungsstelle kann auf der Oberfläche des Werkstückes angeordnet sein (z.B. bei Gravur, kein Durchschneiden). Die Bearbeitungsstelle kann in Ausbreitungsrichtung des Laserstrahls (Z-Richtung) über oder in einer Auflageebene des Werkstücks liegen. Das Werkstück kann auf einer Lagereinrichtung gelagert sein.

Bei dem Werkstück kann es sich um ein flächiges Werkstück handeln, das zum Schneiden mit der Laserschneidmaschine, insbesondere in Form einer Flachbettmaschine bestimmt ist. Alternativ oder kumulativ kann das Werkstück auch ein dreidimensionales Objekt sein, z.B. ein Vollprofil, ein Rohr- oder ein Hohlprofil, das insbesondere zum Schneiden mit einer Rohrschneidmaschine bestimmt ist. Das Rohr kann ein eckiges und/oder ein rundes Querschnittsprofil aufweisen. Das Werkstück kann insbesondere aus Metall sein, z.B. ein Metallblech oder Metallprofil.

Der Maschinenrahmen dient zur lateral beweglichen Lagerung der Lagereinrichtung. Der Maschinenrahmen kann als Gestell ausgebildet sein oder eine gestellartige Struktur aufweisen. Die Lagereinrichtung kann z.B. in Form eines Wechseltisches ausgebildet sein. Der Wechseltisch ist - vorzugsweise mit Linearantrieben - entlang einer parallel zur Auflageebene des Werkstücks liegenden Ebene verschieblich gelagert und kann in den Maschinenrahmen ein- und ausfahren. Der Maschinerahmen umfasst zumindest ein Rahmenteil. Der Maschinerahmen und insbesondere dessen Rahmenteil kann eine Brücke tragen, an der ein Laserschneidkopf beweglich gelagert ist. Die Brücke ist mittels wenigstens eines Brückenfusses auf dem Rahmenteil verfahrbar gelagert und ist insbesondere auf in einer X-Richtung verlaufenden Führungsschienen am Rahmenteil geführt. Vorzugsweise ist der Laserschneidkopf in einer Y-Richtung auf oder entlang der Brücke verfahrbar.

Alternativ oder kumulativ zur Brücke, kann ein Roboterarm vorgesehen sein, an dem der Laserschneidkopf angeordnet ist und über den dieser bewegt werden kann.

Die Lagereinrichtung dient zur Lagerung des Werkstücks zumindest während und nach dem Schneidvorgang. Die Lagereinrichtung kann z.B. als rostartige Lagereinrichtung ausgebildet sein oder ein Rost (umfassend mehrere Rostelemente) umfassen und zur Lagerung eines flächigen Werkstücks dienen. Die Rostelemente der Lagerreinrichtung können im Wesentlichen parallel ausgebildet sein. Die Rostelemente der Lagereinrichtung können auch gewellt ausgebildet sein (z.B. in der Längsachse des Rostelementes gewellt und/oder eine Vertiefung/Erhöhung bildend). Die Lagereinrichtung dient zur temporären Lagerung und/oder zum Transport des Werkstücks zum Zwecke des Schneidens.

Die Lagereinrichtung kann ferner auch als Dorn, insbesondere Spanndorn (englisch: "mandrels") ausgebildet sein und zum Halten von Rohren und/oder Hohlprofilen zum Zwecke des Laserschneidens und/oder während des Laserschneidens dienen.

Der mindestens eine Luftschallsensor, vorzugsweise mindestens zwei Luftschallsensoren, besonders vorzugsweise vier Luftschallsensoren, können in Strahlausbreitungsrichtung unterhalb der Bearbeitungsstelle angeordnet und zu dieser hin ausgerichtet sein. Insbesondere für eine Rohrbearbeitung kann ein Luftschallsensor ausreichend sein, während bei einer Bearbeitung von flächigen Werkstücken ein Luftschallsensor einsetzbar ist, aber mindestens zwei Luftschallsensoren bevorzugt sind.

Der wenigstens eine Luftschallsensor kann zumindest indirekt an einem Brückenfuss angeordnet sein, so dass der mindestens eine Luftschallsensor mit dem an der Brücke geführten Laserschneidkopf in X-Richtung mitverfahren wird, wenn die Brücke mit dem Laserschneidkopf bewegt wird.

Der wenigstens eine Luftschallsensor dient - wie der Name bereits sagt - zur Detektion von Luftschall und insbesondere nicht von Körperschall. Er kann als Richtmikrofon ausgebildet sein.

Der Luftschallsensor ist vorzugsweise derart konfiguriert, dass er den detektierten Schall (analoges Signal) in ein digitales Signal umwandelt (mittels eines AD-Wandlers). Damit wird es möglich, die detektierten Schallsignale (Rohsignal) in einer digitalen Datenverarbeitungseinheit digital weiter zu verarbeiten. Der Luftschallsensor kann einen analogen Eingang und einen digitalen Ausgang als Schnittstelle aufweisen. Alternativ oder kumulativ können die analogen detektierten Schallsignale in elektrische Signale umgewandelt werden.

Alternativ oder kumulativ kann der Luftschallsensor eine Frequenzierungseinrichtung umfassen, die dazu bestimmt ist, eine Frequenzcharakteristik des Schalls zu bestimmen.

In einer bevorzugten Ausführungsform der Erfindung ist es vorgesehen, die Luftschallemissionen in einem Frequenzbereich zwischen 10 Hz bis 2 MHz zu erfassen.

Besonders bevorzugt ist die Erfassung des oberen Frequenzbereichs, insbesondere über 150kHz, besonders bevorzugt in einem Bereich zwischen 150kHz und 700kHz. In diesem Frequenzbereich ist das akustische Nutzsignal aus folgendem Grund besonders interessant. In einer Laserschneidmaschine ist mit Hintergrundrauschen zu rechnen, z.B. aufgrund der Schmauch-Absaugung, Querblaseinrichtungen etc. Das Hintergrundrauschen kann das Nutzsignal überdecken oder stören. Aus der Literatur ist bekannt, dass störendes Hintergrundrauschen allerdings meistens im tiefen Frequenzbereich dominiert, insbesondere beispielsweise unterhalb von 150kHz (vgl. z.B. Acoustic Process Control for Laser Material Processing (xarion.com)).

Der wenigstens eine Luftschallsensor, insbesondere das mindestens eine Richtmikrofon, kann dreh- und schwenkbar gelagert sein, insbesondere um der Bewegung des Laserschneidkopfes beim Schneiden gemäss einem Schneidplan nachgeführt zu werden und/oder auch bei Bewegung des Laserschneidkopfes auf die Bearbeitungsstelle hin ausgerichtet zu bleiben. Die Schwenkachse (Achse, um die der Luftschallsensor geschwenkt werden kann) des Luftschallsensors kann insbesondere parallel zu der X-Richtung (Richtung, in der die Brücke auf dem Rahmenteil verfährt) ausgebildet sein, so dass der mindestens eine Luftschallsensor quasi weiter nach oben oder weiter nach unten in Bezug auf ein Raumkoordinatensystem ausgerichtet werden kann bzw. zumindest in einer Ebene verschwenkt werden kann, die parallel mit der Y-Z-Ebene (siehe oben) ist. Die Schwenkachse kann auch parallel zu einer Z-Richtung ausgebildet sein, so dass der Luftschallsensor quasi weiter nach vorne oder hinten in Bezug auf die Verfahrrichtung der Brücke ausgerichtet werden kann. Die Z-Richtung verläuft rechtwinklig zur X- und Y-Richtung. Die Z-Richtung kann insbesondere in einer Ausbreitungsrichtung des Laserstrahls (Strahlausbreitungsrichtung) oder parallel dazu verlaufen.

Der wenigstens eine Luftschallsensor kann eine Detektionsachse aufweisen, die kennzeichnet, in welcher Richtung die Schallsignale hauptsächlich erfasst werden. Die Detektionsachse entspricht im Wesentlichen einer Achse zwischen Schallquelle und Luftschallsensor. Die Detektionsachse des Luftschallsensors kann auf die Bearbeitungsstelle ausgerichtet sein. Die Detektionsachse kann zumindest um die X-Achse verschwenkt werden, um eine genaue Ausrichtung auf die Bearbeitungsstelle zu ermöglichen. Das Verschwenken des Luftschallsensors kann während einer Bewegung des Laserschneidkopfes und/oder zusätzlich zur Bewegung der Brückenfüsse entlang der X-Achse erfolgen.

Alternativ oder kumulativ kann die Ausrichtung / Nachführung (insbesondere das Verschwenken) des zumindest einen Luftschallsensors automatisch anhand des Schneidplans gesteuert werden, so dass immer eine exakte Ausrichtung auf die aktuelle Position der Bearbeitungsstelle in der X-Y-Ebene gegeben ist. Der Luftschallsensor kann somit in der X/Y-Ebene oder einer dazu parallelen Ebene verschwenkt werden. Der Verschwenkwinkel kann ferner in Abhängigkeit von der Position der Bearbeitungsstelle in der durch die X- und Y-Richtungen aufgespannten X-Y-Ebene bestimmt werden. Dies kann vorzugsweise automatisch mittels eines Nachführalgorithmus gemäss Schneidplan ausgeführt werden.

Alternativ oder kumulativ kann der Luftschallsensor um eine Drehachse gedreht werden, wobei sich die Drehachse parallel zu oder in der X-Richtung erstreckt. Die vorstehend genannten Schwenk- und/oder Drehbewegungen können auch kombiniert werden.

Der Luftschallsensor kann aus einem einzelnen Sensorelement bestehen. Alternativ kann der Luftschallsensor eine Vielzahl von Sensorelementen umfassen, die an unterschiedlichen Positionen in dem Luftschallsensor angeordnet sind, z.B. rotationssymmetrisch, so dass der Luftschallsensor mittels einer Drehtrommel nach einem Revolverprinzip bei Ausfall eines Sensorelementes gedreht werden kann, so dass das jeweils nächste fehlerfrei funktionierende Sensorelement dessen Funktion übernimmt. Die Drehung erfolgt insbesondere um die Detektionsachse des Luftschallsensors. Damit ist es nicht notwendig, bei einem Defekt eines Sensorelementes, den ganzen Luftschallsensor auszutauschen.

Handelt es sich um eine Flachbettschneidmaschine für flächige Werkstücke, so kann die Lagereinrichtung als Tisch, insbesondere verfahrbarer Wechseltisch, ausgebildet sein, wie bereits vorhergehend dargestellt. In diesem Fall ist der zumindest eine Luftschallsensor unterhalb der durch die Lagereinrichtung (z.B. Wechseltisch) definierten Auflageebene angeordnet oder in Strahlausbreitungsrichtung des Laserstrahls nach bzw. unterhalb der Bearbeitungsstelle (Schnittpunkt zwischen Laserstrahl und Werkstück) angeordnet. Der zumindest eine Luftschallsensor kann zu einer Achse hin ausgerichtet sein, die in Strahlausbreitungsrichtung verläuft und durch Bearbeitungsstelle führt.

Handelt es sich um eine Laserrohrschneidemaschine für rohrförmige Werkstücke, so kann die Lagereinrichtung mit zumindest einem, vorzugsweise zwei seitlichen Halterungen ausgebildet sein, die die Funktion eines Spannfutters übernehmen und zum Halten des rohrförmigen Werkstückes dienen (z.B. als Spanndorn). In diesem Fall ist der zumindest eine Luftschallsensor ebenfalls unterhalb (in Strahlausbreitungsrichtung gesehen) oder innerhalb des rohrförmigen Werkstücks angeordnet (also in Strahlausbreitungsrichtung gesehen: unterhalb eines Schnittpunktes zwischen Laserstrahl und Werkstück). Diese Ebene kann parallel zur Horizontalen sein (wenn z.B. das Rohr parallel zur Horizontalen eingespannt ist) oder um eine Schwenkwinkel verschwenkt sein (wenn z.B. der Laserstrahl auf das Rohr in einem schrägen Winkel zur Horizontalen auftrifft). Der zumindest eine Luftschallsensor kann zu einer Achse hin ausgerichtet sein, die in Strahlausbreitungsrichtung verläuft und durch die Bearbeitungsstelle führt.

Die X-Richtung (bis auf ein Vorzeichen übereinstimmend mit einer X-Achse) verläuft quer zur Achse der Strahlausbreitungsrichtung. Die X-Richtung kann insbesondere in einem rechten Winkel zur Achse der Strahlausbreitungsrichtung verlaufen. Falls beispielsweise ein Schwenkkopf für Phasenschnitte eingesetzt wird, kann die X-Richtung auch von 90° abweichen. Die X-Richtung verläuft in oder parallel zur Längsachse des Wechseltisches oder der Lagereinrichtung. Die Y-Richtung (bis auf ein Vorzeichen übereinstimmend mit einer Y-Achse) verläuft quer und insbesondere in einem rechten Winkel zur X-Achse. Die Y-Richtung kann die Richtung kennzeichnen, in der der Schneidkopf auf einer Brücke verschoben wird. Die Z-Richtung kann parallel zur Strahlausbreitungsrichtung des Laserstrahls und insbesondere bei einer Flachbettlaserschneidmaschine senkrecht zu einer durch die X-Richtung und die Y-Richtung aufgespannten Ebene verlaufen.

Alternativ oder ergänzend kann die Laserschneidmaschine mit einer Brücke ausgebildet sein mit zwei seitlich an dieser angeordneten Brückenfüssen zur Führung der Brücke an dem Maschinenrahmen in der X-Richtung senkrecht zur Y-Richtung.

Der Luftschallsensor kann direkt an dem Brückenfuss, insbesondere unterhalb der Auflageebene, angeordnet und/oder befestigt sein. Alternativ kann er indirekt über ein weiteres Bauteil, z.B. an einer Halterung oder einem Träger, an dem Brückenfuss angeordnet und/oder befestigt sein. Das weitere Bauteil kann wiederum seinerseits, insbesondere lösbar, an dem Brückenfuss angeordnet und/oder befestigt sein.

Es kann in einer bevorzugten Ausführungsform der Erfindung vorgesehen sein, dass an jedem der beiden Brückenfüsse, insbesondere unterhalb der Auflageebene, wenigstens ein Luftschallsensor angeordnet ist. Damit kann der Schall von beiden Seiten (der Lagereinrichtung) detektiert werden. Weiterhin können die Signale der Luftschallsensoren (mindestens einer oder mehrere) von den beiden gegenüberliegenden Seiten in Zusammenhang mit einer Positionsinformation über die Position des Laserschneidkopfes, insbesondere in Y-Richtung ausgewertet werden.

In einer weiteren bevorzugten Ausführungsform der Erfindung kann die Laserschneidmaschine mit wenigstens einer an dem Brückenfuss oder an jedem Brückenfuss, insbesondere unterhalb der Auflageebene, angeordneten Halterung für den wenigstens einen Luftschallsensor ausgebildet sein.

Alternativ oder ergänzend kann der wenigstens eine Luftschallsensor beweglich an dem Brückenfuss, vorzugsweise beweglich an der Halterung am Brückenfuss, insbesondere verschwenkbar angeordnet sein. Insbesondere kann der wenigstens eine Luftschallsensor in einer Y/Z-Ebene oder um die X-Achse in einem Winkelbereich verschwenkt werden. Dies hat den Vorteil, dass der Luftschallsensor besser auf eine Position unterhalb der Bearbeitungsstelle ausgerichtet werden kann. Insbesondere kann der Luftschallsensor nach oben oder unten (also in einer durch die Z-Achse und die Y-Achse aufgespannten Ebene) geneigt werden und somit besser auf die dynamisch bewegte Quelle des Luftschalls ausgerichtet werden. Das Verschenken kann zusätzlich oder unabhängig zur Bewegung der Luftschallsensoren (z.B. durch die Bewegung der Brückenfüsse entlang der X-Achse) ausgeführt werden.

Alternativ oder ergänzend können an jeweils einem Brückenfuss, vorzugsweise an der Halterung am Brückenfuss, zumindest zwei Luftschallsensoren, vorzugsweise in X-Richtung beabstandet zueinander, angeordnet sein.

Dabei können die zumindest zwei Luftschallsensoren in Bezug auf die X-Richtung einen Sensorabstand voneinander aufweisen, der geringer ist als der Abstand zwischen jeweils zwei Elementen der Lagereinrichtung zur Lagerung des zu bearbeitenden Werkstücks. Dies hat den Vorteil, dass jeweils auf einer der beiden Seiten der Lagereinrichtung zumindest zwei Schallsignale in einem Zwischenbereich zwischen jeweils zwei Lagereinrichtungselementen detektiert werden können.

Bei den vorstehend genannten Elementen der Lagereinrichtung kann es sich um Rostelemente eines Auflageelementes, insbesondere eines Auflagerosts, handeln.

Alternativ oder ergänzend kann an wenigstens einer Halterung zumindest eine Fluiddüse zur Erzeugung eines Fluidvorhangs in Schallerfassungsrichtung vor dem oder den Luftschallsensoren angeordnet sein.

Bei der Fluiddüse kann es sich um eine Reinigungsdüse handeln, die dazu bestimmt ist, Verschmutzungen, wie Schlacke, Späne und Stäube zu entfernen.

In einer bevorzugten Ausführungsform der Erfindung ist es vorgesehen, dass die Reinigungsdüsen optional, typischerweise alternierend, zum Luftschallsensor zugeschaltet werden können. Dies hat den Vorteil, dass der Gasstrahl der Reinigungsdüsen den Luftschallsensor nicht stört. Damit kann die Qualität des Schätzergebnisses verbessert werden.

Alternativ oder ergänzend kann an jedem Brückenfuss eine Halterung vorgesehen sein, wobei an jeder Halterung zumindest eine Fluiddüse angeordnet ist.

Alternativ oder ergänzend kann eine Auswertungseinrichtung für die Sensorsignale des wenigstens einen Luftschallsensors vorgesehen sein, wobei die Sensorsignale in der Auswertungseinrichtung um die Schallemissionen der wenigstens einen Fluiddüse bereinigt werden. Damit wird die Qualitätsschätzung präziser.

Alternativ oder ergänzend kann zumindest eine Absaugöffnung zur Erzeugung eines Fluidstroms unterhalb der Auflageebene ausgebildet sein.

Alternativ oder ergänzend kann die Laserbearbeitungsmaschine optische Sensoren aufweisen, um, insbesondere kumulativ zu den erfassten Schallsignalen, optische Signale von einer Prozesszone der Laserbearbeitung des Werkstücks zu erfassen. Der Begriff "Prozesszone" kann einen grössenmässig konfigurierbarer Raum um die Bearbeitungsstelle bezeichnen.

Die optischen Sensoren können ebenso wie der zumindest eine Luftschallsensor unterhalb der durch das Auflageelement definierten Auflageebene angeordnet sein. Alternativ oder ergänzend können die optischen Sensoren an einer anderen Position und insbesondere auch über der vorstehend genannten Auflageebene angeordnet sein, insbesondere am Laserschneidkopf und/oder in einer Schneidzelle. Die Schneidzelle kann als eine Umhausung eines Laserbearbeitungsraumes ausgebildet sein.

Die optischen Sensoren können als Kamera, insbesondere als CMOS- oder CCD-Kamera, oder als Menge von Kameras und/oder als Photodioden ausgebildet sein.

Alternativ oder ergänzend können so viele optische Sensoren ausgebildet sein wie Luftschallsensoren vorgesehen sind, so dass die Anzahl der Luftschallsensoren mit der Anzahl der optischen Sensoren übereinstimmt. Ergänzend kann eine andere Anzahl von optischen Sensoren im Vergleich zur Anzahl von Luftschallsensoren ausgebildet sein.

Die vorstehend genannte Aufgabe wird weiterhin gelöst durch ein Verfahren zum Erfassen von Luftschall, wobei der so erfasste Luftschall insbesondere für ein Monitoring eines Laserschneidprozess einer Laserschneidmaschine, wie vorstehend beschrieben, verwendet werden kann, mit folgendem Verfahrensschritt:
a) Detektieren von Schallsignalen mit zumindest einem Luftschallsensor während der Laserbearbeitung eines Werkstücks, wobei der zumindest eine Luftschallsensor in Strahlausbreitungsrichtung nach, insbesondere unterhalb, der Bearbeitungsstelle angeordnet und zu dieser hin ausgerichtet ist; der zumindest eine Luftschallsensor kann entweder unterhalb einer durch eine Lagereinrichtung definierten Auflageebene angeordnet oder in Strahlausbreitungsrichtung unterhalb einer Bearbeitungsstelle angeordnet sein; der zumindest eine Luftschallsensor kann zu der Bearbeitungsstelle oder einer Achse hin ausgerichtet sein, die in Strahlausbreitungsrichtung verläuft.

Als Auflageebene wird die Ebene bezeichnet, in der ein (flächiges) Werkstück mit seiner Unterseite auf der Lagereinrichtung aufliegt (z.B. Oberseite der Rostelemente eines Wechseltisches). Die Bearbeitungsstelle kann über der Auflageebene oder in der Auflageebene liegen.

In einer bevorzugten Weiterbildung des Verfahrens kann das Verfahren zum Bereitstellen eines Qualitätsschätzergebnisses verwendet werden. Dazu kann das Verfahren die folgenden weiteren Schritte umfassen:
b) Einlesen der detektierten und insbesondere digitalisierten Schallsignale in einer digitalen Verarbeitungseinheit;
c) Auswerten der eingelesenen detektierten Schallsignale mittels eines maschinellen Lernalgorithmus, der dazu ausgebildet ist, eine Schneidqualität auf Basis der ausgewerteten eingelesenen detektierten Schallsignale zu schätzen und die Schätzung als Ergebnis bereitzustellen. Optional kann das Ergebnis auf einem HMI (human machine interface) ausgegeben werden. Das HMI kann auf der Laserschneidmaschine oder separat dazu angeordnet sein, beispielsweis auf einem mobilen Gerät (z.B. digitales Endgerät).

Das Bereitstellen des Qualitätsschätzergebnisses kann online, also während des Schneidens ausgeführt werden, so dass das Ergebnis bereits während dem Schneidprozess bereitgestellt werden kann.

Es kann vorgesehen sein, zu prüfen, ob das Ergebnis mit der geschätzten Schneidqualität eine über die HMI vorkonfigurierbare Schwelle (entspricht einer Qualitätsvorgabe) unterschreitet. Falls das der Fall ist, kann es vorgesehen sein, zumindest einen der folgenden Schritte auszuführen:
d) Erzeugen von Steuersignalen zur Steuerung oder Regelung der Laserbearbeitungsmaschine; und/oder
e) Anwenden der erzeugten Steuersignale auf einer Steuereinheit der Laserbearbeitungsmaschine. Das Verfahren kann somit zum kontinuierlichen Überwachen einer Laserschneidmaschine und/oder des Laserschneidprozesses verwendet werden.

Im einfachsten Fall können in dem Fall, falls die geschätzte Schneidqualität die Schwelle (Qualitätsvorgabe) unterschreitet, automatische Monitoringmassnahmen angesteuert werden, insbesondere zur engmaschingen Überwachung des Prozesses. So kann z.B. das Zeitintervall zum Auswerten der erfassten Schallsignale kleiner bestimmt werden. Bei Einhaltung der Qualitätsvorgaben (repräsentiert über den konfigurierbaren Schwellenwert) kann es vorgesehen sein, dass Zeitintervall zum Auswerten größer zu wählen.

Alternativ oder kumulativ kann das Qualitätsschätzergebnis zur Steuerung des zukünftigen Schneidprozesses verwendet werden, indem z.B. Einstellparameter bzw. Parameter in Bezug auf den Schneidprozess (z.B. Maschinenparameter) angepasst werden, um ein besseres Qualitätsschätzergebnis zu erzielen.

In einer vorteilhaften Weiterbildung der Erfindung kann der maschinelle Lernalgorithmus einen Korrekturalgorithmus umfassen, der dazu bestimmt ist, die zu verändernden Parameter für den Schneidprozess (z.B. Fokuslage, Vorschub, Laserleistung etc.) ebenfalls als Ergebnis bereitzustellen, so dass der Laserschneidprozess wieder im Stande ist, die geforderten und konfigurierten Qualitätsvorgaben einzuhalten. Der Korrekturalgorithmus kann ebenfalls als maschineller Lernalgorithmus ausgebildet sein. Der Korrekturalgorithmus wird in einer Trainingsphase trainiert, um zu einer geschätzten Schneidqualität (die in diesem Fall nicht die Qualitätsvorgaben erfüllt) die zu verändernden Schneidparameter zu bestimmen. Das Training kann durchgeführt werden, indem ungenügenden Schneidqualitätsschätzwerten, ein Label zugeordnet wird, wobei das Label den zumindest einen zu korrigierenden Parameter umfasst und einen diesbezüglichen Korrekturwert.

Der maschinelle Lernalgorithmus stellt ein Ergebnis bereit. In einer ersten Ausführungsform der Erfindung umfasst das Ergebnis die geschätzte Schneidqualität; in einer zweiten Ausführungsform der Erfindung umfasst das Ergebnis - gegebenenfalls zusätzlich - die zu korrigierenden Parameter und/oder die Korrekturwerte.

Der zumindest eine Luftschallsensor kann beweglich an einem Brückenfuss einer Brücke angeordnet sein. Der zumindest eine Luftschallsensor kann während der Laserbearbeitung mit der Brücke in X-Richtung entlang der Lagereinrichtung bewegt werden. Insbesondere kann der zumindest eine Luftschallsensor ohne eigenen Antrieb mit der Bewegung des Laserschneidkopfes quasi passiv unterhalb des Werkstücks mitgefahren werden.

Der maschinelle Lernalgorithmus kann trainiert sein, um den Schallsignalen, insbesondere den digitalisierten Schallsignalen, eine Schneidqualität, insbesondere in Form eines Qualitätsstatus, zuzuordnen. Gegebenenfalls können Steuersignale so erzeugt werden, dass ein Qualitätsstatus in Antwort auf die detektierten Schallsignale optimiert werden kann.

Der maschinelle Lernalgorithmus kann ausgelegt sein, die erfassten Luftschallsensorsignale (Spektrogramme) sowie optional optische Signale auszuwerten, um mittels Maschinenintelligenz bzw. intelligentem Algorithmus auf die Schneidqualität zu schliessen. Typischerweise wird dazu ein Algorithmus im Bereich künstlicher Intelligenz resp. des maschinellen Lernens (Maschine Learning) verwendet.

In einer bevorzugten Ausführungsform der Erfindung wird ein End-To-End-Algorithmus angewendet. Es ist somit keine Stufe der manuellen Merkmalsextraktion, gefolgt von einem Klassifikator mehr erforderlich. Ein End-to-End-Algorithmus ermöglicht, dass das System automatisch interne Repräsentationen der notwendigen Verarbeitungsschritte bzw. Netzwerkschichten (zur Qualitätsbeurteilung bzw. -Schätzung auf Basis von Schallsignalen) erlernt, wie z. B. die Erkennung wichtiger Schneidqualitätsmerkmale, wobei die erfassten Schallsignale neben den diesen zugeordneten Qualitätsmerkmalen als Trainingssignal dienen. Dies hat den Vorteil, dass kein problemspezifisches Wissen in die Modell-Architektur einfliessen muss, was ein umfassendes datengetriebenes Lernen ermöglicht. Voraussetzung dazu ist, dass für das Training genügend Daten vorhanden sind. Zudem müssen die Daten zumindest teilweise gelabelt sein, d.h. zu den Rohdaten müssen Labels zur Verfügung stehen. Insbesondere müssen zu den Schallsignalen Qualitätsmerkmale bzw. ein Mass für die Qualität zugeordnet werden. Die Trainingsdaten können durch Testschnitte mit einer anschliessenden Qualitätsbeurteilung (manuell und/oder algorithmisch) und/oder mit zu korrigierenden Parametern zum Labeln der Daten bereitgestellt werden.

Nach dem Training wird eine Datenstruktur erstellt, in der den erfassten Luftschallsignalen, Qualitätsmerkmale (oder Qualitätskenngrößen) und/oder zu korrigierende Parameter zugeordnet sind. Das derart trainierte Modell (z.B. neuronale Netz) kann dann für neu erfassten Luftschallsignale angewendet werden, um ein Qualitätsmerkmal zu schätzen und/oder zu korrigierende Parameter auszugeben. Die zu korrigierende Parameter werden auf der Laserschneidmaschine angewendet und dienen dazu, dass in Folge die Qualitätsvorgabe wieder eingehalten werden kann.

Insbesondere kann es vorgesehen sein, eine Vielzahl von unterschiedlichen Schnitten mit unterschiedlichen Qualitäten (betr. Riefen/Rauheit und Grat) zu produzieren, wobei der Schall (und ggf. die optischen Signale) aufgezeichnet werden. In einem zweiten Schritt werden von den geschnittenen Teilen die Qualität vermessen, d.h. der Grat und die Rauheit wird mit Genauigkeit von wenigen Mikrometern (µm) vermessen. Die vermessene Qualität dient als Labeling zum Trainieren des (ggf. tiefen) neuronalen Netzes (D)NN.

Damit die Schneidqualität insbesondere in Echtzeit während dem Schneiden geschätzt werden kann, muss das Modell initial mit vielen Daten trainiert werden. Dazu werden viele Schneidkonturen resp. Teile unterschiedlicher Schneidqualität erzeugt und sämtliche Sensordaten (Luftschallsensordaten und optional optische Sensordaten) gespeichert. Anschliessend werden die Schneidqualitätsmerkmale der Schneidkonturen in Form eines Qualitätsstatus ermittelt. Vorzugsweise werden die Merkmale mit z.B. einem Oberflächenmessgerät örtlich aufgelöst auf der ganzen Schneidkontur gemessen. Alternativ kann die Schneidqualität auch durch Experten beurteilt resp. gelabelt werden. Schneidqualitätskriterien sind primär Grathöhe, Schlackenrückstand und/oder Schnittkantenrauheit. Weiter ist es möglich, anstelle der ermittelten Qualitätsmerkmale direkt die 3D-Punktwolken der gemessenen Oberflächen für das Training zu verwenden.

Mit den aufgezeichneten Schallsignalen und den zugeordneten Labels (Schneidqualität und/oder zu korrigierende Parameter) kann auf übliche Weise das neuronale Netz trainiert werden, so dass das trainierte neuronale Netz in der Inferenzphase aus den Schallsignalen die Schneidqualität schätzen kann.

Als Modelle im End-to-End-Ansatz werden vorzugsweise tiefe neuronale Netzwerke verwendet, welche mit einem Deep-Learning-Algorithmus trainiert werden.

Nach erfolgreichem Training wird der Algorithmus in der Inferenzphase die Schneidqualität und/oder zu korrigierende Parameter gemäss den trainierten Kriterien selbständig erkennen.

In Erweiterung der Lernalgorithmen für Netzstrukturen mit sehr wenigen oder keinen Zwischenlagen (sog. Flache Netze), wie beim einlagigen Perzeptron, ermöglichen die Methoden des Deep Learnings auch bei zahlreichen Zwischenlagen einen stabilen Lernerfolg. Die vielen Zwischenlagen ermöglichen das schrittweise Abstrahieren hochdimensionaler Eingangsdaten, was sich insbesondere für Audio-Signale, Spektrogramme, Bilder und Bildfolgen eignet, ohne dass die Extraktion von Kennwerten (Signalfeatures) vordefiniert werden muss. Es existiert eine Vielzahl von Netzstrukturen, wovon für die vorliegende Aufgabenstellung mit Audiosignalen und optionalen Kamerabildern vorzugsweise Convolutional Neural Networks (CNN) und/oder Residual Neural Networks (RNN) verwendet werden.

Für zeitliche Signale (z.B. Schallsignale über die Zeit) müssen auch zeitliche Zusammenhänge resp. zeitliche Features erlernt werden können. Dazu eignen sich Gated Recurrent Unit (GRU) und Long Short Term Memory (LSTM) Netze. Vorteilhaft ist die Verwendung eines kombinierten Netzes, welches o.g. Netzstrukturen in unterschiedlichen Layern zusammenfasst.

Es sei bemerkt, dass nebst der bevorzugten Deep-Learning Intelligenz alternativ oder zusätzlich auch andere Algorithmen verwendet werden können, z.B. polynomiale Regressionsmodelle.

Als weiterführende vorteilhafte Ausgestaltung der Erfindung kann ein Online-Learning-Verfahren integriert werden. Dazu wird dem nach obigen Methoden trainierten Modell ein Algorithmus zur adaptiven Einstellung gewisser Modellparameter nachgeschaltet. Dies kann z.B. mittels eines Reinforcement-Learning-Algorithmus und/oder mittels eines Sparce-Coding-Algorithmus (siehe z.B. https://proceedings.neurips.cc/paper/ 2006/file/2d71b2ae158c7c5912cc0bbde2bb9d95-Paper.pdf implementiert werden. Dadurch kann die Schätzung der Schneidqualität in Echtzeit während des Schneidens, oder intermittierend mittels Feedback durch den Operateur erfolgen. Weiterhin ist es möglich, die Schneidparameter auf Basis der geschätzten Qualität anzupassen.

Reinforcement Learning oder Verstärkungslernen ist ein Verfahren des maschinellen Lernens, welches durch selbständige Aktionen innerhalb eines Systems versucht, eine Belohnung zu maximieren. Dabei ist es nicht nötig, dass alle Daten gelabelt sind.

Das Schätzen der Qualität erfolgt (in der Inferenzphase, also nach erfolgreichem Training des Netzes) in Echtzeit. Der Begriff "Echtzeit" ist im Sinne der Norm DIN ISO/IEC 2382 und insbesondere so zu verstehen, dass er sich auf einen Zeitraum während laufender Bearbeitung durch den Laser bezieht. Echtzeit meint also nicht nur das enge Zeitraster von wenigen Millisekunden, das für eine schnelle Regelung des Schneidprozesses benötigt wird, sondern kann sich vielmehr auch auf einen Zeitraum in Sekundenbereich beziehen (z.B. im Bereich 1 - 5 Sekunden, vorzugsweise 1 bis 2 Sekunden). Echtzeit bedeutet also, dass die Schritte, insbesondere die Bereitstellung des Ergebnisses mit der Qualitätsschätzung mit einer Zeitverzögerung (in Abgleich mit dem Laserbearbeitungsprozess) von maximal wenigen Sekunden ausgeführt werden, sodass beispielsweise geeignete Massnahmen zur Beeinflussung des Schneidprozesses (Regelung oder Steuerung des Schneidprozesses) ergriffen werden können, insbesondere eine automatische Schneidqualitätsoptimierung.

Alternativ oder kumulativ kann mittels der vorgesehenen Schneidqualitätsschätzung in Echtzeit auch eine Schneidprozess-Regelung implementiert werden. Ziel ist dabei, dass neben der Schneidqualität auch mitgeschätzt wird, welcher mindestens eine Schneidparameter nicht optimal eingestellt ist oder besser eingestellt werden könnte (zumindest ein zu korrigierender Parameter bzw. Korrekturparameter genannt), sofern die Schneidqualität von der gewünschten Qualität abweicht. Möglich ist auch, dass mehrere Schneidparameter optimiert werden können, um eine bessere Schneidqualität zu erreichen. Je nach Fehlstellung eines bestimmten Schneidparameters kann das Signalmuster anders aussehen. Aufgrund der Vielzahl an Signalwerten und der darin enthaltenen umfassenden Information über den Qualitätsstatus bzw. Schneidzustand kann erwartet werden, dass eine solche Regelung realisiert werden kann. Dementsprechend ist in der Regelung vorgesehen, primär den vermuteten fehlerhaften Schneidparameter zu adaptieren.

Die Schneidqualität wird aus den Sensorsignalen geschätzt und mit der Zielqualität verglichen. Die Zielqualität kann durch Konfiguration eines Schwellenwertes für die Qualität definiert werden (der Schwellenwert gibt dann, welche Zielqualität mindestens erreicht werden soll). Die Zielqualität kann z.B. aus einer Datenbank oder auch via HMI und Bediener stammen. Weichen Schneidqualität und Zielqualität merklich oder über einen vorkonfigurierbaren Schwellenwert voneinander ab, so kann automatisch mittels eines Korrekturalgorithmus eine Schneidparameterkorrektur errechnet und/oder auf die Schneidparameter angewendet werden. Das Anwenden der Schneidparameterkorrektur kann von dem Erfassen eines Verifikationssignals abhängig gemacht werden, um dem Anwender verstärkt Einflussmöglichkeit auf die Regelung zu geben.

Die oben erläuterten Regelstrategien sind beispielhaft und nicht die einzig möglichen Strategien. Einfachere Ansätze können z.B. auf «Trial-and-Error» basieren, d.h. bei beobachteter Qualitätsverschlechterung können die wichtigsten Schneidparameter zufällig verändert werden, wobei dabei beobachtet wird, ob sich die Qualität allenfalls verbessert.

Alternativ oder ergänzend kann neben dem Schätzen einer Schneidqualität ein Schätzen einer möglichen Abweichung von einem idealen Prozesszustand bestimmt werden. Der ideale Prozesszustand kann vorbestimmt sein. Zu einem idealen Prozesszustand gehörte primär, dass 1) die Energiebilanz stimmt (genügend Leistung appliziert wird, um das vorgesehene Material aufzuschmelzen), und dass 2) die Temperatur der Schmelze ideal ist (je höher desto dünnflüssiger und ergo besser austreibbar sowie geringere Oberflächenspannung und somit weniger Tröpfchen- und Gratbildung, jedoch nicht zu hoch, dass Verdampfung entsteht) und dass 3) der Gasstrahl in der Fuge möglichst laminar und mit möglichst spätem Ablösen von der Schneidfront verläuft. Um den Prozesszustand zu erfassen, kann es vorgesehen sein, zumindest die Temperatur der Schmelze zu messen und zu verarbeiten.

Das Verfahren kann in einer bevorzugten Ausführungsform der Erfindung einen weiteren Schritt nach dem Auswerteschritt (Schritt c)) umfassen, nämlich eine Ausgabe der geschätzten Schneidqualität und/oder der ausgewerteten detektieren Schallsignale (Rohsignale oder digitalisierte oder weiter verarbeitete Signale).

Der maschinelle Lernalgorithmus ist vorzugsweise auf der digitalen Verarbeitungseinheit, insbesondere deren Recheneinheit, implementiert. Der maschinelle Lernalgorithmus kann auf einer anderen Recheneinheit als derjenigen der digitalen Verarbeitungseinheit oder auf letzterer trainiert worden sein.

In einer ersten einfachen Implementierung repräsentieren die Steuersignale Massnahmen zur Verbesserung der Qualität des Schneidprozesses. Bei den Massnahmen kann es sich insbesondere um Veränderungen der Schneidparameter handeln, wie z.B. eine Veränderung der Fokuslage und/oder des Laserleistung und/oder der Vorschubgeschwindigkeit und/oder des Düsenabstands und/oder des Prozessgasdrucks und/oder eine Laserstrahlmagnifikation und/oder BPP (beam parameter product). Weiter kann auch die Düse und/oder eine Optik/optisches Schutzglas ausgetauscht werden, sollte diese verschleisst oder verschmutzt sein.

In einer weiteren vorteilhaften Ausführung kann das Ergebnis (mit der geschätzten Schneidqualität) und/oder die darauf basierend berechneten Steuersignale direkt an einen Controller auf der Laserschneidmaschine zur Steuerung und/oder Regelung des Laserschneidprozesses übertragen werden. Damit wird der Automatisierungsgrad gesteigert.

Alternativ oder ergänzend können die Steuersignale auch eine Ausgabe einer Meldung auf einem HMI (human machine interface) initiieren. Alternativ oder ergänzend können die Steuersignale auch das Versenden einer Meldung an den Maschinenbetreiber initiieren, insbesondere ein Versenden über eine Mobilfunkverbindung, wie z.B. eine SMS.

Grundsätzlich können zwei oder drei unterschiedliche Kommunikationsmedien bzw. Kommunikationskanäle zur Signal- und/oder Datenübertragung vorgesehen sein:
1. Luft für den mittels der Luftschallsensoren detektierten Luftschall; und
2. Digitale Netzwerkschnittstelle zur Bereitstellung der Eingangsdaten für das neuronale Netzwerk (Luftschallsensordaten und optional optische Sensordaten, insbesondere in verarbeiteter, digitalisierter Form) und optional:
3. Funkverbindung, insbesondere Mobilfunkverbindung, zur Übertragung des Ergebnisses in Form der geschätzten Schneidqualität und/oder der Steuersignale an ein elektronisches, insbesondere mobiles, Endgerät.

Alternativ oder ergänzend können Steuersignale und/oder das Ergebnis über eine Funk- und/oder Datenverbindung (z.B. auch über die digitale Netzwerkschnittstelle) an einen Controller der Laserschneidmaschine weitergeleitet werden.

Alternativ oder ergänzend kann vorgesehen sein, dass bei Eintreten von bestimmten Bedingungen, ein Maschinenstopp ausgelöst wird.

Das Verfahren kann in einer bevorzugten Ausführungsform der Erfindung einen weiteren Schritt nach dem Auswerteschritt umfassen, nämlich eine Ausgabe der geschätzten Schneidqualität und/oder der ausgewerteten detektieren Schallsignale und/oder optional die Korrekturparameter. Die Ausgabe kann mittels einer Ausgabeschnittstelle, z.B. einer UI, erfolgen.

Es kann vorgesehen sein, dass der zumindest eine Luftschallsensor und/oder der zumindest eine optische Sensor in Strahlrichtung nach der Bearbeitungsstelle, insbesondere unterhalb der Bearbeitungsstelle mit dem Laserbearbeitungsprozess mitfährt.

Der maschinelle Lernalgorithmus kann trainiert worden sein, um aus den Schallsignalen Informationen zu extrahieren und einen Qualitätsstatus und/oder Korrekturparameter zuzuordnen, so dass als Ergebnis eine geschätzte Schneidqualität und/oder Korrekturparameter bereitgestellt werden kann. Weiterhin können die Steuersignale ggf. so erzeugt werden, dass der Qualitätsstatus in Antwort auf die detektierten Schallsignale maximiert werden kann.

Der Qualitätsstatus kann mehrdimensional sein. Der Qualitätsstatus kann mehrere Qualitätsmerkmale umfassen, insbesondere die Riefenbildung und/oder die Gratbildung. Alternativ oder ergänzend kann der Qualitätsstatus einen Schlackenrückstand und/oder eine Schnittkantenrauheit umfassen.

Alternativ oder kumulativ kann der maschinelle Lernalgorithmus trainiert worden sein, um neben der Schneidqualität auch denjenigen mindestens eine Schneidparameter zu schätzen, der nicht optimal eingestellt ist.

In einem weiteren Aspekt betrifft die Erfindung eine digitale Verarbeitungseinheit zur Ausführung des oben beschriebenen Verfahrens, mit:
- Einer Einleseschnittstelle zum Einlesen von detektierten Schallsignalen von dem zumindest einen Luftschallsensor während des Laserschneidens eines Werkstücks;
- wobei die digitale Verarbeitungseinheit und insbesondere eine Recheneinheit derselben dazu ausgebildet ist, einen maschinellen Lernalgorithmus auf die detektierten Schallsignale anzuwenden, um diese auszuwerten. Die Auswertung kann ein Qualitätsschätzergebnis bereitstellen. Das Qualitätsschätzergebnis kann dazu verwendet werden, Steuersignale zu erzeugen;
- Ausgabeschnittstelle zur Ausgabe des Qualitätsschätzergebnisses und/oder der Steuersignale.

Die Schneidparameter können ausgewählt sein aus der Gruppe, bestehend aus Laserleistung, Gasdruck, Fokuslage, Fokusdurchmesser, BPP und weiteren Kenngrössen. Die Laserleistung liegt typischerweise in einem Bereich zwischen 0 und ca. 50 kWatt. Grössere Laserleistungen sind ebenfalls möglich. Der Gasdruck liegt beim Schmelzschneiden in einem Bereich zwischen 1 und 25 bar und beim Brennschneiden um die 0,5bar. Die Fokuslage kann in einem Bereich von -100 und +200 mm liegen und der Fokusdurchmesser liegt üblicherweise in einem Bereich zwischen 100 und 600 Mikrometer. Das BPP kann in einem Bereich zwischen 1 bis 5 mm*mrad liegen und der Düsenabstand kann z.B. 0.1mm bis mehrere Millimeter betragen.

In einem weiteren Aspekt betrifft die Erfindung ein Laserschneidsystem mit einer Laserschneidmaschine, wie vorstehend beschrieben, zum Schneiden von Werkstücken, mit
- einem Netzwerk zum Datenaustausch mit der digitalen Verarbeitungseinheit, wie vorstehend beschrieben
- der digitalen Verarbeitungseinheit.

In einem weiteren Aspekt betrifft die Erfindung ein Computerprogramm, wobei das Computerprogramm in eine Speichereinheit eines Computers ladbar ist und Programmcodeabschnitte enthält, um den Computer zu veranlassen, das Verfahren zum Bestimmen von Bahnabweichungen zur Steuerung einer Laserschneidmaschine gemäss einem der vorangehenden Verfahrensansprüche auszuführen, wenn das Computerprogramm in dem Computer ausgeführt wird.

In einem weiteren Aspekt bezieht sich die Erfindung auf ein Computerprogrammprodukt, das ein Computerprogramm umfasst, wobei das Computerprogramm in eine Speichereinheit einer Recheneinheit geladen werden kann und Programmcodeabschnitte enthält, um die Recheneinheit dazu zu bringen, das oben beschriebene Verfahren mit seinem Varianten für eine Laserschneidmaschine gemäss einem Aspekt der Erfindung auszuführen, wenn das Computerprogramm in der Recheneinheit ausgeführt wird.

In einem weiteren Aspekt betrifft die Erfindung ein computerlesbares Medium, auf dem Programmcodeabschnitte eines Computerprogramms gespeichert oder gesichert sind, wobei die Programmcodeabschnitte in eine Recheneinheit ladbar und/oder ausführbar sind, um die Recheneinheit zu veranlassen, das Verfahren, wie oben beschrieben, für die Laserschneidmaschine gemäss einem Aspekt der Erfindung auszuführen, wenn die Programmcodeabschnitte in der Recheneinheit ausgeführt werden.

### Kurze Beschreibung der Figuren:

In der folgenden detaillierten Figurenbeschreibung werden nicht einschränkend zu verstehende Ausführungsbeispiele mit deren Merkmalen und weiteren Vorteilen anhand der Zeichnung besprochen. In dieser zeigen:
- FIG.1: zeigt eine schematische Seitenansicht einer Laserschneidmaschine, die als Flachbettschneidmaschine ausgebildet ist gemäss einer bevorzugten Ausführungsform der Erfindung;
- FIG. 2: ist eine Detaildarstellung eines Luftschallsensors von der in Fig. 1 dargestellten Laserschneidmaschine;
- FIG.3: ist eine Draufsicht auf einen Ausschnitt eines Laserschneidsystems mit zwei Luftschallsensoren, die in dieser Ausführungsform der Erfindung mit zwei Reinigungsdüsen kombiniert sind;
- FIG.4: ist eine fotografische Darstellung einer möglichen Architektur, bei der der Laserschneidkopf verfahrbar an einer ebenfalls verfahrbaren Brücke angeordnet ist;
- FIG: 5: ist eine schematische Darstellung einer Laserschneidmaschine mit einer digitalen Datenverarbeitungseinheit zur Ausführung eines Verfahrens zum Bereitstellen eines Qualitätsschätzergebnisses gemäss einem Ausführungsbeispiel;
- FIG. 6: ist eine schematische Darstellung der digitalen Verarbeitungseinheit zum Bereitstellen eines Qualitätsschätzergebnisses und
- FIG. 7: zeigt ein Ablaufdiagramm eines Verfahrens zum Bereitstellen eines Qualitätsschätzergebnisses in unterschiedlichen Ausführungsvarianten.

### Beschreibung von vorteilhaften Ausführungsformen in Zusammenhang mit den Figuren

Die Erfindung betrifft ein Computer-implementiertes Verfahren zur Berechnung eines Qualitätsschätzergebnisses eines Schneidprozesses einer Laserschneidmaschine L auf Basis von Schallsignalen von Luftschallsensoren, wobei die entsprechenden Luftschallsensoren unterhalb einer Bearbeitungsstelle angeordnet sind und insbesondere unterhalb einer Lagereinrichtung, wie z.B. einem Schneidtisch. Die Laserschneidmaschine L wird typischerweise mit einer Leistung über 1 KW betrieben. Sie kann insbesondere zum Schneiden von Metallblechen und -rohren eingesetzt werden.

Das Verfahren kann in einer bevorzugten Ausführungsform der Erfindung einen intelligenten Schätzalgorithmus zur Schätzung einer Qualitätskennzahl implementieren, insbesondere mittels einen maschinellen Lernalgorithmus ML, der die detektierten Luftschallsignale in Hinblick auf die Qualität auswertet

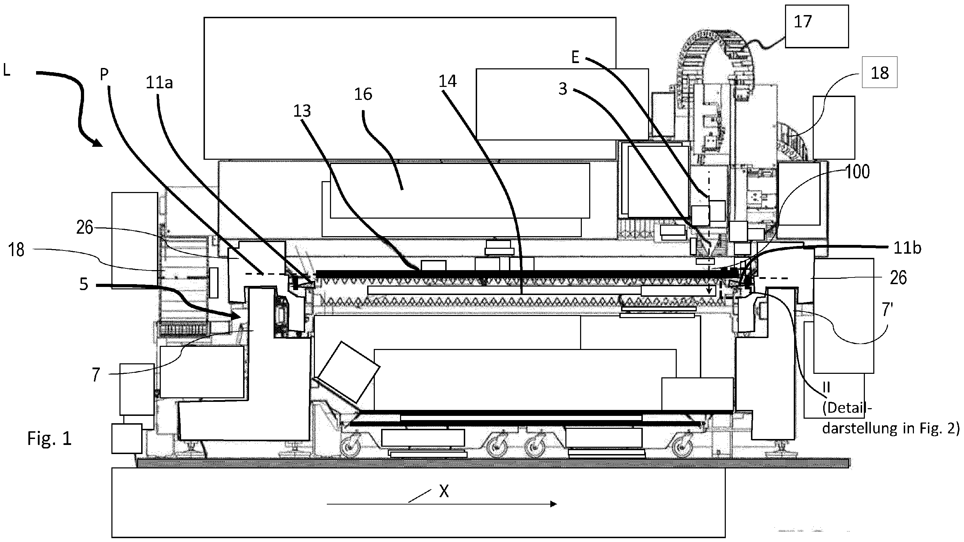

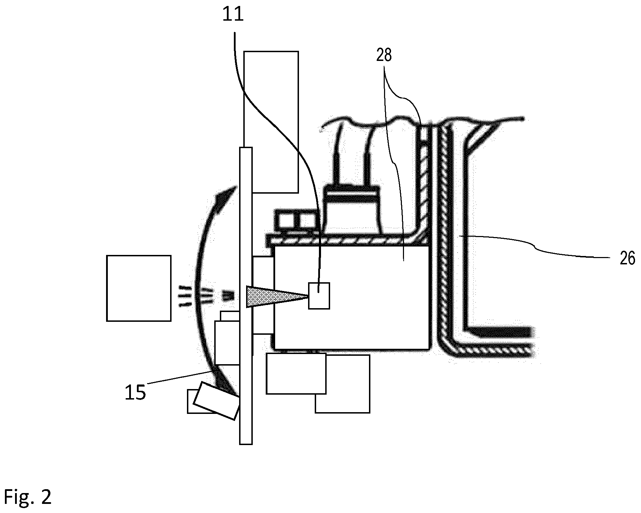

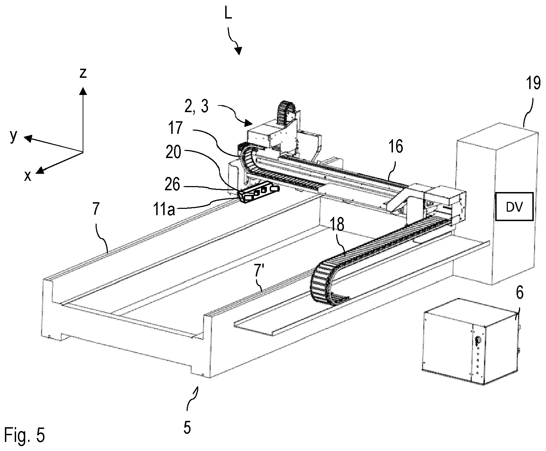

Fig. 1 zeigt eine Laserschneidmaschine L zum Schneiden von Werkstücken 13, die auf einer Lagereinrichtung 14, wie z.B. einem Wechseltisch, angeordnet sind. Ein Laserschneidkopf 3 ist an einer beweglichen Brücke 16 angeordnet. Die Brücke 16 kann in einer X-Richtung (mit Vor- und Rückbewegung entlang einer X-Achse) relativ zum Werkstück 13 bewegt, insbesondere verschoben werden. Die Brücke 16 weist zwei jeweils seitlich gelagerte Brückenfüsse 26 auf. In Fig. 1 sind auch mit den Bezugszeichen 17 und 18 bezeichnete Kabelführungen dargestellt. Eine Kabelführung 17 verläuft in Y-Richtung und eine Kabelführung 18 verläuft in X-Richtung (in Fig. 5 besser dargestellt). An beiden Seiten des Wechseltisches 14 ist zumindest je ein Luftschallsensor 11a, b angeordnet, also zumindest ein Luftschallsensor 11 pro Seite, vorzugsweise sind mehr Luftschallsensoren vorgesehen. Die Luftschallsensoren sind unterhalb einer Auflageebene P angeordnet. Die Auflageebene P ist eine Ebene, die im Wesentlichen parallel zur Ebene des Werkstückes 13 (bei flächigen Werkstücken) verläuft und auf der bzw. über der das Werkstück 13 zumindest zum Zwecke des Schneidens gelagert ist. Die Laserschneidmaschine L weist einen Maschinenrahmen 5 auf mit zumindest einem Rahmenteil 7, 7'. Unterhalb der Lagereinrichtung und insbesondere des Wechseltisches 14 kann eine Auffangeinrichtung zum Auffangen der geschnittenen Teile vorgesehen sein. Die Auflageebene P kann definiert sein durch obere Auflageelemente (z.B. Gitterrostspitzen) des Wechseltisches 14. Der Laserschneidkopf 3 dient zur Aussendung eines Laserstrahls, der eine Strahlausbreitungsrichtung E definiert, ausgehend vom Laserschneidkopf in Richtung des Werkstückes 13. Bei flächigen Werkstücken, die im Wesentlichen horizontal gelagert sind, entspricht die Strahlausbreitungsrichtung E einer im Wesentlichen vertikal verlaufenden Bahn von oben (Laserschneidkopf) nach unten (auf das Werkstück). Mit dem Bezugszeichen II ist ein Bereich gekennzeichnet, der im Folgenden detaillierter in Fig. 2 gezeigt und beschrieben wird.

**Fig. 2** ist eine Detaildarstellung von Fig. 1 und zeigt die Anordnung einer der Luftschallsensoren 11 in Strahlausbreitungsrichtung E nach bzw. unterhalb einer Bearbeitungsstelle 100, wobei die Luftschallsensoren 11 als Mikrophone, insbesondere Richtmikrophone, ausgebildet sein können, im Detail. Wie ersichtlich, ist der jeweiligen Luftschallsensor 11 an einer Halterung 28 des jeweiligen Brückenfusses 26 angeordnet und/oder befestigt. Die Luftschallsensoren 11 sind somit in einem Bereich - in Strahlausbreitungsrichtung E gesehen - unterhalb des Werkstückes bzw. nach dem Prozessort angeordnet und dienen zur Erfassung des Luftschalls sozusagen von unten. Die Luftschallsensoren 11 sind beweglich angeordnet und/oder können insbesondere synchron mit der Bewegung des Laserschneidkopfes 3 bewegt werden.

Wie in Fig. 2 dargestellt, kann der jeweilige Luftschallsensor 11 geschwenkt werden. Das Verschwenken kann automatisch über einen Motor ausgeführt werden oder manuell.

Die Schwenkachse, um die der Luftschallsensor geschwenkt werden kann, verläuft vorzugsweise parallel zur X-Achse/Richtung, also der Richtung, in der die Brücke 16 verfahren werden kann. Diese Verschwenkbarkeit des Luftschallsensors 11 ist in Fig. 2 mit dem Bezugszeichen 15 gekennzeichnet. Damit kann der jeweilige Luftschallsensor 11 in einem bestimmten Winkelbereich nach oben oder unten, also in einer durch die Z- und Y-Richtung definierten Ebene verschwenkt werden. Dieser Winkelbereich kann vorkonfiguriert sein und/oder in einem Bereich von 0° (horizontal) - 90° (vertikal), insbesondere 0°- +20° liegen. Der vorstehend genannte Winkelbereich kann kumulativ oder alternativ in Abhängigkeit von der Position der Bearbeitungsstelle in der durch die X- und Y-Richtungen aufgespannten X-Y-Ebene gemäss Schneidplan bestimmt werden und automatisch der jeweiligen Position in der X-Y-Ebene nachgeführt werden.

Alternativ oder kumulativ kann die Schwenkachse, um die der Luftschallsensor 11 geschwenkt werden kann auch parallel zur Z-Achse, die insbesondere im Wesentlichen vertikal verläuft, ausgerichtet sein. Damit kann der jeweilige Luftschallsensor 11 in einem bestimmten Winkelbereich nach vorne oder hinten (in Bezug auf die Verfahrrichtung der Brücke 16) geschwenkt werden. Hier kann derselbe oder ein anderer Winkelbereich vorkonfiguriert sein als der Winkelbereich in Bezug auf die X-Achse. Der Z-Achsen-Winkelbereich kann in Abhängigkeit von der Grösse des Werkstücks 13 und/oder in Abhängigkeit von der Grösse der zu schneidenden Teile gemäss Schneidplan bestimmt werden. Der Z-Achsen-Winkelbereich kann ein Spektrum zwischen -90° und +90° abdecken. Die Verschwenkung um die Z-Achse hat den Vorteil, dass der Luftschallsensor proaktiv und mit einem zusätzlichen Mittel mit der Bewegung des Schneidkopfs 3 mitgefahren werden kann und damit eine Feinjustierung der Erfassungsposition bereitstellen kann, während die Grobjustierung durch die Bewegung der Halterung 28 bzw. des Brückenfusses 26 erfolgt.

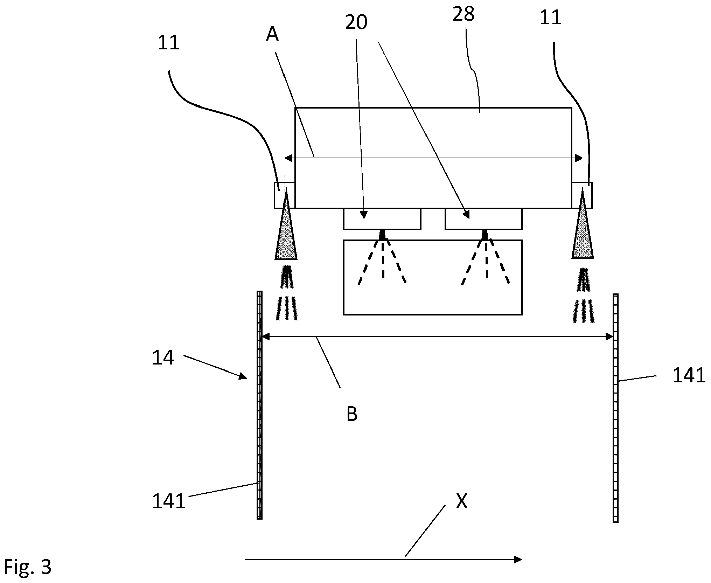

**Fig. 3** zeigt wiederum einen Teil des Laserschneidsystems mit zwei Rostelementen 141 der Lagereinrichtung 14. Die jeweiligen Rostelemente 141 weisen einen Abstand B voneinander in X-Richtung auf. Wie in Figur 3 gezeigt, können zwei Luftschallsensoren 11 an der Halterung 28 derart angeordnet sein, dass sie jeweils zwischen zwei Rostelementen 141 angeordnet sind. Die zwei Luftschallsensoren 11 weisen einen Abstand A voneinander auf. Vorzugsweise ist der Abstand A kleiner gewählt als der Abstand B (jeweils bezogen auf die X-Achse). Damit wird es möglich, dass der Bereich zwischen zwei Rostelementen 141, die sich in einer Y-Achse erstrecken, durch zwei Luftschallsensoren 11 sensorisch erfasst wird. Alternativ können auch mehr als zwei Luftschallsensoren 11 zwischen jeweils zwei Rostelementen 141 vorgesehen sein. Mit dem Bezugszeichen X ist die Richtung X gekennzeichnet, in der die Brücke 16 verfahren werden kann.

Alternativ oder kumulativ können die Luftschallsensoren 11 mit zumindest einer Fluiddüse 20, insbesondere einer Reinigungsdüse 20, kombiniert werden. Vorzugsweise ist dieselbe Anzahl von Reinigungsdüsen 20 und von Luftschallsensoren 11 vorgesehen.

Die Fluiddüsen 20 können, ebenso wie die Luftschallsensoren 11, an der Halterung 28 angeordnet und/oder befestigt sein.

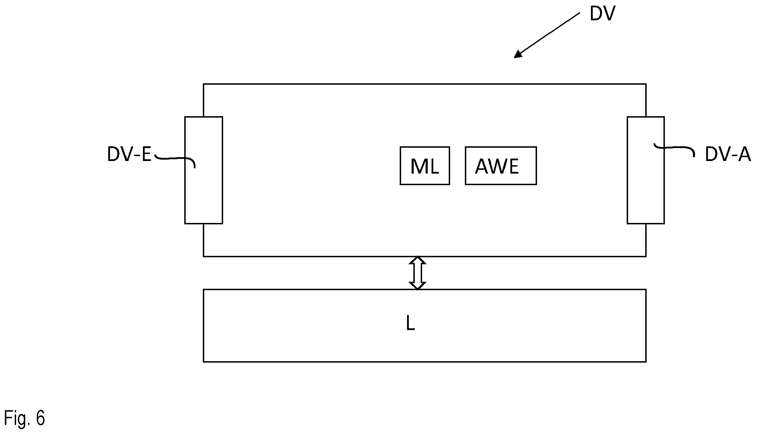

In einer bevorzugten Ausführungsform der Erfindung ist eine Auswertungseinrichtung AWE (in Figur 6 dargestellt) zur Auswertung der erfassten Sensorsignale (insbesondere der Luftschallsensorsignale) vorgesehen. Die Auswertungseinrichtung AWE kann dazu bestimmt sein, die erfassten Luftschallsensorsignale der Luftschallsensoren 11 um die Schallemissionen der zumindest einen Fluiddüse 20 zu bereinigen. Damit kann die Qualität des Qualitätsschätzergebnisses verbessert werden.

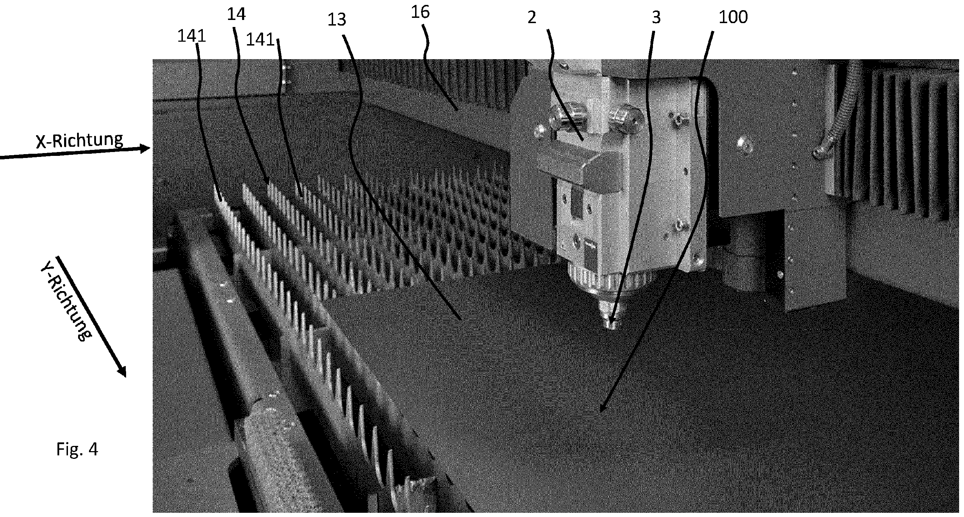

**Fig. 4** zeigt eine fotografische Darstellung eines Laserschneidsystems gemäss einem Ausführungsbeispiel, z.B. anhand den vorhergehenden Figuren, mit einem verfahrbaren Wagen 2, an dem der Laserschneidkopf 3 angeordnet ist. Ein verfahrbarer Wagen 2 kann lateral auf der Brücke 16 in Y-Richtung verfahren werden, um das Werkstück 13 zu bearbeiten, das auf der Lagereinrichtung 14, insbesondere dem Schneidrost 14, liegt. Der Laserschneidkopf 3 dient zur Bearbeitung des Werkstückes 13 an der Bearbeitungsstelle 100.

Damit stets immer mindestens ein Mikrophon oder ein anderer Luftschallsensor in der Nähe des Prozessgeschehens ist, werden vorzugsweise auf beiden Seiten des Wechseltisches 14 Luftschallsensoren (und insbesondere Mikrophone) 11 eingesetzt. So ist, unabhängig vom Ort des Schneidens (insbesondere in Y-Richtung), die summative Schallstärke von den auf beiden Seiten liegenden Mikrophonen 11 stets ähnlich gross.

Figur 4 zeigt den Schneidtisch oder Wechseltisch 14 mit den einzelnen (Schneid-) Rostelementen 141 von schräg oben. In gewissen Fällen kann es vorkommen, dass genau auf (bzw. entlang) einem Schneidrostelement 141 geschnitten wird. In diesem Fall kann die Detektion des Schalles durch das Schneidrostelement behindert werden, wenn das Mikrophon 11 exakt stirnseitig des Schneidrostelementes 141 sitzt. Daher wird vorgeschlagen, mindestens zwei Mikrophone 11 pro Seite einzusetzen (wie in Fig. 3 gezeigt), wobei die zwei Mikrophone 11 in X-Richtung (siehe Fig. 4 bzgl. des Koordinatensystems) leicht versetzt angebracht sein sollen, insbesondere in einem Abstand A, der kleiner ist, als der Abstand B zwischen zwei benachbarten Schneidrostelementen 141.

Die detektierten Schallsignale können für die Prozessüberwachung mit derselben Klasse von Algorithmen ausgewertet werden, wie die optischen Signale. Zur Signalverarbeitung und - auswertung können insbesondere End-to-End Algorithmen verwendet werden. Die Schallsignale können für sich genommen oder auch zusammen mit optischen Signalen der Schneidqualitätsüberwachung zugeführt werden, wobei sich neuronale Netze, insbesondere tiefe neuronale Netze besonders gut eignen.

Werden Schallsignale zusammen mit bekannten Schneidqualitäten trainiert, so erlernt das neuronale Netz, auf welche Schallinformation geachtet werden muss, um die Schneidqualität schätzen zu können. Bekannte Geräusche von anderen Schallquellen, die keine Information zur Schneidqualität beinhalten (wie z.B. die Geräusche der Reinigungsdüsen) können durch geeignete Geräusch-Filter aus den von dem oder den Mikrophonen erfassten Schallsignalen herausgefiltert werden. Hierzu können dazu individuelle Geräuschprofile dieser anderen Schallquellen erfasst werden.

**Figur 5** zeigt in einer perspektivischen Darstellung das Laserschneidsystem mit der Laserschneidmaschine L und einer digitalen Verarbeitungseinheit DV, die in einem Schaltschrank 19 angeordnet sein kann und den Luftschallsensoren 11a. Zum Schneiden des Werkstückes 13 wird der Laser durch eine Laserlichtquelle 6 mit Energie versorgt. Der an einem verfahrbaren Wagen 2 angeordnete Laserschneidkopf 3 wird über einen insbesondere umlaufenden Kettenantrieb verfahren. Mit dem Bezugszeichen 17 ist die Y-Kabelführung gekennzeichnet. Das Bezugszeichen 18 kennzeichnet die X-Kabelführung, um die Brücke 16 in Längsrichtung relativ zum Werkstück 13 und/oder relativ zur Lagereinrichtung 14 zu bewegen. In der in Figur 5 dargestellten Ausführungsform sind zusätzlich zu den Luftschallsensoren 11 auch Reinigungsdüsen 20 ausgebildet, die jeweils an den Brückenfüssen 26 angeordnet sein können. Der Maschinenrahmen 5 umfasst Rahmenteile 7,7' als Träger des Rahmens.

**Figur 6** zeigt in einer schematischen Darstellung die digitale Verarbeitungseinheit DV mit einer Einlese-Schnittstelle DV-E und einer Ausgabeschnittstelle DV-A. Die Ausgabeschnittstelle DV-A dient zur Ausgabe des Qualitätsschätzergebnisses. Die digitale Verarbeitungseinheit DV kann eine Recheneinheit umfassen, auf dem der maschineller Lernalgorithmus ML implementiert ist. Des weiteren kann eine Auswertungseinrichtung AWE auf der digitalen Verarbeitungseinheit DV ausgebildet sein. Die Auswertungseinrichtung kann auf der Recheneinheit implementiert sein. Die digitale Verarbeitungseinheiten DV steht in Datenaustausch mit der Laserschneidmaschine L, insbesondere um die erfassten Sensorsignale (Luftschallsensorsignale und/oder optische Signale) zu erfassen und zu verarbeiten.

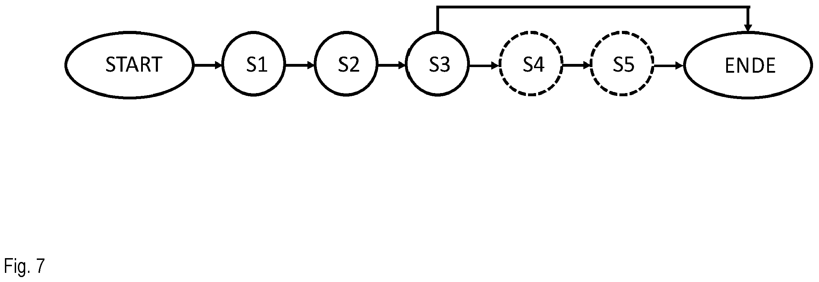

**Figur 7** zeigt ein Ablaufdiagramm eines Verfahrens zum Bereitstellen eines Qualitätsschätzergebnisses für einen Laserschneidprozess einer Laserschneidmaschine L in unterschiedlichen Ausführungsvarianten.

Nach dem Start des Verfahrens werden in Schritt S1 Schallsignale von zumindest einem Luftschallsensor 11 während der Laserbearbeitung des Werkstücks 13 detektiert bzw. erfasst (auch als Schritt a) bezeichnet). Dabei ist der zumindest eine Luftschallsensor 11 in Strahlausbreitungsrichtung E nach und insbesondere unterhalb der Bearbeitungsstelle 100 angeordnet und zu dieser hin ausgerichtet. Die Bearbeitungsstelle 100 (in Figur 1 und Figur 4 gezeigt) liegt auf dem Werkstück oder innerhalb des Werkstücks 13 auf der Achse der Laserstrahlausbreitungsrichtung E.

In einer ersten Ausführungsform der Erfindung kann das Verfahren hier enden. Alternativ kann es mit Schritt b wie folgt fortgesetzt werden:
Optional können in Schritt S2 (auch als Schritt b) bezeichnet) die detektierten Schallsignale (Luftschall) in der digitalen Verarbeitungseinheit DV eingelesen werden, um dort verarbeitet zu werden. Insbesondere werden aus den erfassten Schallsignalen Informationen über den Schneidprozess extrahiert.

In Schritt S3 können (optional) die eingelesenen, detektierten Schallsignale auf der digitalen Verarbeitungseinheit DV ausgewertet werden (Schritt c). Die Auswertung erfolgt mittels eines maschinellen Lernalgorithmus ML, der auf der digitalen Verarbeitungseinheit DV implementiert ist und dazu bestimmt ist, eine Schneidqualität auf Basis der ausgewerteten eingelesenen detektierten Schallsignale zu schätzen und eine geschätzte Schneidqualität als Ergebnis bereitzustellen.

In einer ersten Ausführungsvariante, die in Figur 7 mit durchgezogenen Linien dargestellt ist, kann das Verfahren nach dem Schritt S3 enden. Kumulativ können in weiteren Ausführungsvarianten, die in Figur sieben mit gestrichelten Linien dargestellt sind, weitere Schritte ausgeführt werden.

So kann beispielsweise geprüft werden (Schritt d), ob die als Ergebnis bereitgestellte geschätzte Schneidqualität eine Schwelle unter - oder überschreitet. Die Schwelle kann vorkonfiguriert sein, um ein ausreichendes Mass an Fehlertoleranz und/oder Qualitätsvorgaben bereitstellen zu können. Das Ergebnis dieser Prüfung kann auf einer Benutzerschnittstelle ausgegeben werden.

Weiterhin kann abhängig von dem Ergebnis der Prüfung in Schritt S4 das Erzeugen von Steuersignalen zur Steuerung oder Regelung der Laserbearbeitungsmaschine L ausgelöst werden (Schritt e).

Optional können kumulativ die erzeugten Steuersignale in Schritt S5 automatisch auf einer Steuereinheit der Laserbearbeitungsmaschine L angewendet bzw. ausgeführt werden (Schritt f). Danach kann das Verfahren beendet oder wiederholt ausgeführt werden. In Fall von Schritt S5 ist der maschinelle Lernalgorithmus dazu bestimmt, zusätzlich zu dem Schätzergebnis für die Qualität noch die zu korrigierenden Parameter, vorzugsweise mit den jeweiligen Korrekturwerten (z.B. "Vorschub verringern auf Wert X" oder "Laserleistung erhöhen auf Wert Y") bereitzustellen. Diese werden dann zur Berechnung der Steuersignale verwendet.

Abschliessend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemässen Gegenstand vorgesehen sein, um gleichzeitig deren vorteilhafte Wirkungen zu realisieren. Insbesondere können die Merkmale, Unteransprüche und/oder alternativen Ausführungsformen der Erfindung, die z.B. in Zusammenhang mit der Laserbearbeitungsmaschine beansprucht oder beschrieben worden sind, ebenso auf das Verfahren übertragen werden und umgekehrt.

Der Schutzbereich der vorliegenden Erfindung ist durch die nachstehenden Ansprüche gegeben und wird durch die in der Beschreibung erläuterten oder den Figuren gezeigten Merkmale nicht beschränkt.

Für einen Fachmann ist es insbesondere offensichtlich, dass die Erfindung nicht nur für flächige Werkstücke, angewendet werden kann, sondern auch für Rohre. Des Weiteren können die Bauteile der digitalen Verarbeitungseinheit auf mehreren physikalischen Produkten verteilt realisiert sein.

### Bezugszeichenliste

- 2: verfahrbarer Wagen
- 3: Laserschneidkopf
- 5: Maschinenrahmen
- 6: Laserlichtquelle
- 7,7': Rahmenteil
- 11, 11a, 11b: Luftschallsensoren, insbesondere Mikrophon
- 13: Werkstück
- 14: Lagereinrichtung, insbesondere Wechseltisch oder Mandrel
- 141: Rostelement
- 16: Brücke
- 17: Y-Kabelführung (in Y-Richtung verlaufend)
- 18: X-Kabelführung (in X-Richtung verlaufend)
- 19: Schaltschrank
- 20: Fluiddüse, insbesondere Reinigungsdüse
- 26: Brückenfuss
- 28: Halterung
- A: Abstand zwischen zwei Luftschallsensoren
- B: Abstand zwischen zwei Rostelementen des Wechseltisches
- AWE: Auswertungseinrichtung
- 100: Bearbeitungsstelle
- DV: digitale Verarbeitungseinrichtung
- DV-E: Einleseschnittstelle
- DV-A: Ausgabeschnittstelle
- E: Strahlausbreitungsrichtung (des Laserstrahls)

- L: Laserschneidmaschine
- ML: maschineller Lernalgorithmus
- P: Auflageebene

- S1: Detektieren von Schallsignalen
- S2: Einlesen der detektieren Schallsignale auf einer digitalen Verarbeitungseinrichtung
- S3: Auswerten der Schallsignale
- S4: Erzeugen von Steuersignalen
- S5: Anwenden der Steuersignale zur Steuerung der Laserschneidmaschine L

## Patentansprüche

1. Laserschneidmaschine (L) zum Schneiden von Werkstücken (13) an einer Bearbeitungsstelle (100), mit
- einem Laserschneidkopf (3), der wenigstens in einer X-Richtung beweglich gelagert ist und eine Strahlausbreitungsrichtung eines Laserstrahls definiert;
- einer Lagereinrichtung (14) zur Lagerung des zu schneidenden Werkstücks (13);
- einem Maschinenrahmen (5) mit wenigstens einem Rahmenteil (7, 7');
- wenigstens einem in der X-Richtung relativ zu dem Rahmenteil (7, 7') beweglichen Luftschallsensor (11), wobei der wenigstens eine Luftschallsensor (11) in Strahlausbreitungsrichtung (E) nach, insbesondere unterhalb, der Bearbeitungsstelle (100) angeordnet und zu dieser hin ausgerichtet ist.

2. Laserschneidmaschine (L) nach dem unmittelbar vorangehenden Anspruch, wobei mindestens zwei Luftschallsensoren (11), besonders vorzugsweise vier Luftschallsensoren (11), in Strahlausbreitungsrichtung (E) unterhalb der Bearbeitungsstelle (100) angeordnet und zu dieser hin ausgerichtet sind.

3. Laserschneidmaschine (L) nach einem der vorangehenden Ansprüche, wobei der wenigstens eine Luftschallsensor (11) zur Detektion von Luftschall dient, insbesondere in einem Frequenzbereich zwischen 10Hz und 2MHz, besonders bevorzugt in einem Bereich zwischen 150kHz und 700kHz.

4. Laserschneidmaschine (L) nach einem der vorangehenden Ansprüche, mit einer Brücke (16) mit zwei seitlich an dieser angeordneten Brückenfüssen (26) zur Führung der Brücke (16) an dem Maschinenrahmen (5) in einer X-Richtung senkrecht zu einer Y-Richtung, wobei der wenigstens eine Luftschallsensor (11) zumindest indirekt an einem Brückenfuss (26) angeordnet ist.

5. Laserschneidmaschine (L) nach dem unmittelbar vorangehenden Anspruch, bei der an jedem der beiden Brückenfüsse (26) wenigstens ein Luftschallsensor (11) angeordnet ist.

6. Laserschneidmaschine (L) nach einem der vorangehenden Ansprüche 4 oder 5, wobei an jeweils einem Brückenfuss (26), vorzugsweise an der Halterung (28) am Brückenfuss (26), zumindest zwei Luftschallsensoren (11), vorzugsweise in X-Richtung beabstandet zueinander, angeordnet sind.

7. Laserschneidmaschine (L) nach dem unmittelbar vorangehenden Anspruch, wobei die zumindest zwei Luftschallsensoren (11) in Bezug auf die X-Richtung einen Sensorabstand voneinander aufweisen, der geringer ist als der Abstand zwischen jeweils zwei Rostelementen (141) der Lagereinrichtung (14) für ein zu bearbeitendes Werkstück (13).

8. Laserschneidmaschine (L) nach einem der vorangehenden Ansprüche, wobei zumindest eine Fluiddüse (20) zur Erzeugung eines Fluidvorhangs in Schallerfassungsrichtung vor dem oder den Luftschallsensoren (11) angeordnet ist.

9. Laserschneidmaschine (L) nach Anspruch 8, wobei eine Auswertungseinrichtung (AWE) für die Sensorsignale des wenigstens einen Luftschallsensors (11) vorgesehen ist, wobei die Sensorsignale in der Auswertungseinrichtung (AWE) um die Schallemissionen der wenigstens einen Fluiddüse (20) bereinigt werden.

10. Laserschneidmaschine (L) nach einem der vorangehenden Ansprüche, wobei die Laserbearbeitungsmaschine (L) optische Sensoren aufweist, um optische Signale von einer Prozesszone der Laserbearbeitung des Werkstücks (13) zu erfassen.

11. Verfahren zum Erfassen von Luftschallsignalen für einen Laserschneidprozess einer Laserschneidmaschine (L) nach einem der vorangehenden Ansprüche, mit zumindest folgendem Verfahrensschritt:
a) Detektieren (S1) von Schallsignalen mit zumindest einem Luftschallsensor (11) während der Laserbearbeitung eines Werkstücks (13), wobei der zumindest eine Luftschallsensor (11) in Strahlausbreitungsrichtung (E) nach, insbesondere unterhalb, der Bearbeitungsstelle (100) angeordnet und zu dieser hin ausgerichtet ist.

12. Verfahren nach dem vorangehenden Verfahrensanspruch, wobei das Verfahren zum Bereitstellen eines Qualitätsschätzergebnisses dient und zusätzlich folgende Verfahrensschritte umfasst:
b) Einlesen (S2) der detektieren Schallsignale in einer digitalen Verarbeitungseinheit (DV);
c) Auswerten (S3) der eingelesenen detektieren Schallsignale mittels eines maschinellen Lernalgorithmus (ML), der dazu ausgebildet ist, eine Schneidqualität auf Basis der ausgewerteten eingelesenen detektieren Schallsignale zu schätzen und eine geschätzte Schneidqualität als Ergebnis bereitzustellen.

13. Verfahren nach dem vorangehenden Verfahrensanspruch, wobei das Verfahren umfasst:
d) Prüfen, ob die geschätzte Schneidqualität eine Schwelle unterschreitet und bejahendenfalls: Ausführen zumindest eines der folgenden Schritte:
e) Erzeugen (S4) von Steuersignalen zur Steuerung oder Regelung der Laserbearbeitungsmaschine (L); und/oder
f) Anwenden (S5) der erzeugten Steuersignale auf einer Steuereinheit der Laserbearbeitungsmaschine (L).

14. Verfahren nach einem der vorangehenden Verfahrensansprüche, bei dem der zumindest eine Luftschallsensor (11) in Strahlausbreitungsrichtung (E) nach der Bearbeitungsstelle (100), insbesondere unterhalb der Bearbeitungsstelle (100) mit dem Laserbearbeitungsprozess mitfährt.

15. Verfahren nach einem der vorangehenden Verfahrensansprüche, bei dem der maschinelle Lernalgorithmus (ML) trainiert worden ist, um den Luftschallsignalen einen Qualitätsstatus zuzuordnen, so dass gegebenenfalls Steuersignale so erzeugt werden, dass ein Qualitätsstatus in Antwort auf die detektierten Schallsignale maximiert werden kann, insbesondere durch Anpassung zumindest eines nicht optimal eingestellten Schneidparameters, der mittels des maschinellen Lernalgorithmus (ML) bestimmt worden ist.

16. Digitale Verarbeitungseinheit (DV) zur Ausführung des Verfahrens nach einem der Verfahrensansprüche 12 bis 15, mit:
- Einer Einleseschnittstelle (DV-E) zum Einlesen von detektierten Luftschallsignalen von dem zumindest einen Luftschallsensor während des Laserschneidens eines Werkstücks (13);
- wobei eine Recheneinheit der digitalen Verarbeitungseinheit (DV) dazu ausgebildet ist, einen maschinellen Lernalgorithmus (ML) auf die detektierten Schallsignale anzuwenden, um diese auszuwerten und eine geschätzte Schneidqualität als Ergebnis bereitzustellen;
- Ausgabeschnittstelle (DV-A) zur Ausgabe des Ergebnisses.

17. Laserschneidsystem zum Überwachen und/oder Regeln einer Laserschneidmaschine nach einem der Ansprüche 1 bis 10, die zum Schneiden von Werkstücken (13) ausgebildet ist, mit
- einem Netzwerk zum Datenaustausch mit einer digitalen Verarbeitungseinheit (DV) nach dem vorangehenden Anspruch
- der digitalen Verarbeitungseinheit (DV).
